# NEW EUROPEAN PATENT SPECIFICATION

(11) **EP 1 895 786 B2**
(45) Date of publication and mention of the opposition decision: **11.03.2015**
(45) Mention of the grant of the patent: 04.03.2009
(21) Application number: 06742196.6
(22) Date of filing: 20.06.2006
(51) Int. Cl.: H04W 4/00

(54) **A METHOD AND DEVICE FOR REALIZING INTELLIGENT CALL SERVICE**
VERFAHREN UND EINRICHTUNG ZUR REALISIERUNG EINES INTELLIGENTEN ANRUFDIENSTES
PROCÉDÉ ET DISPOSITIF DE RÉALISATION D'UN SERVICE D'APPEL INTELLIGENT

(30) Priority: 01.07.2005 CN 200510080332; 29.07.2005 CN 200510088751
(43) Date of publication of application: 05.03.2008
(73) Proprietor: Huawei Technologies Co., Ltd., Longgang District, Shenzhen Guangdong 518129 (CN)
(72) Inventor: SHANG, Wanjun Huawei Administration Building, Shenzhen, Guangdong 518129 (CN)
(74) Representative: Körber, Martin Hans
(86) International application number: PCT/CN2006/001399
(87) International publication number: WO 2007/003100

(56) References cited:
- EP-A- 1 087 628
- EP-A2- 1 376 932
- US-A- 5 329 578
- US-A1- 2004 049 595
- US-B1- 6 366 661

## Description

### Field of the Invention

The present invention relates to communication field, particularly to a method and an apparatus for implementing Intelligent Call Service which combines Presence service and Intelligent Call Routing (ICR) service in an Intelligent Network.

### Background of the Invention

With the popularization of the Internet and the development of the Next Generation Network (NGN), various value-added services are provided, such as Presence service and ICR service in Intelligent Network.

Presence service is an auxiliary means for communication. A User could subscribe to some Presence status Information of other users through Presence service, the Presence status information including the basic status such as online, leaving etc. and various extended status such as home-online, office-online, dinner-leaving, meeting-offline etc.. Users can set their Presence status Information at any moment and inform their friends and colleagues about the change of status information through a Presence server, also can subscribe to the current status Information of their friends.

The main functional entity to implement Presence service in a network is the Presence server which has the main functions of storing the Presence-users' account number informationprocessing the Presence-users' registration, logging in and requesting for various operations, accepting status notification or subscription request of Presence users.

A Presence client is a client entity by which Presence users can accept status notification or subscribe to status request. It interacts with a Presence server through the Session Initial Protocol (SIP).

Whereas Presence service is convenient for a user's friends and colleagues to obtain the user's Presence status information, because the user usually uses terminals with different numbers in different routing status. (Such as, his home phone-number should be dialed when his current status is home-online; and his office phone-number should be dialed when his current status is office-online); the user needs to memorize several contact phone-numbers of the called end to implement instant communication, which brings inconvenience to the user.

ICR service may implement setting a unique number which is bound with a plurality of user terminal numbers for each user, and storing the connection order set by the user for each terminal in different routing status. When there is an incoming call, the system selects the customized connection order according to the user's current routing status and connects the call.

Though a call route can be selected according to a user's customization in ICR service, the called party' s current routing status can not be obtained by the calling party who initiates the call. Thus the calling party is unable to decide whether to initiate the call or not according to the called party's current routing status. The user's experience for using the service is affected.

EP 1 087 628 A2 discloses a method and apparatus in a communications system for routing a call. A call to a subscriber is received. Call routing information is identified for the subscriber. Responsive to identifying call routing information for the subscriber, a determination is then made as to whether a function has been selected for routing the call. Responsive to a determination that a function has been selected for routing the call, the call is routed using a sequence of destinations associated with the function. Responsive to an absence of a determination that the function has been selected for routing the call, the call is routed using a call routing schedule based on time. Destinations to which calls are actually completed are monitored and the sequence in which destinations are selected and the sequence of destinations may be altered depending on the call completions made to destinations within the sequence of destinations. According to EP 1 087 628 A2, the calling party still can not obtain the called party' s current routing status, hence users cannot get other users' updated status information.

### Summary of the Invention

The embodiments of the present invention are as defined by the appended claims.

The embodiments of the present invention realizes advantage complementation between characteristics of Presence service and characteristics of ICR service, and meets users' demands.

### Brief Description of the Drawings

Fig.1 is a schematic diagram of a network system architecture according to an embodiment of the present invention;
Fig.2 is a flow chart of setting a user's Presence status information via the Presence client according to an embodiment of the present invention;
Fig.3 is a schematic diagram of a connection between an ICR server and a Presence server according to an embodiment of the present invention;
Fig.4 is a flow chart of setting a user's Presence status information and implementing synchronous update via IVR service process by a user according to an embodiment of the present invention;
Fig.5 is a flow chart of setting a user's Presence status information and implementing synchronous update via a Presence client by a user according to an embodiment of the present invention;
Fig.6 is a flow chart of synchronous signaling interaction between an ICR server and a Presence server according to an embodiment of the present invention;
Fig.7 is a flow chart of processing an incoming call according to an embodiment of the present invention.

### Detailed Description of the Embodiments

According to an embodiment of the present invention, a method for implementing Intelligent Call Service is used in an Intelligent Network system. The method includes:
allocating a unique number to a user, storing the unique number and a plurality of terminal numbers bound with the unique number, the user's Presence status and a routing order corresponding to the user's presence status information;
on receiving a call request for calling the unique number, determining a routing order according to the user's Presence status information corresponding to the unique number; determining corresponding terminal numbers bound with the unique number according to the routing order and issuing the call sequentially or simultaneously to the corresponding terminal numbers.

According to an embodiment of the present invention, a corresponding apparatus for implementing Intelligent Call Service is provided, including:
a database, storing a unique number allocated to a user, a plurality of user terminal numbers bound with the unique number, the user's Presence status information and a routing order corresponding to the user's Presence status information;
a service logic module, selecting a routing order according to the user's Presence status information corresponding to the unique number on receiving a call request for calling the unique number; determining the corresponding terminal numbers bound with the unique number according to the routing order and issuing the call sequentially or simultaneously to the corresponding terminal numbers.

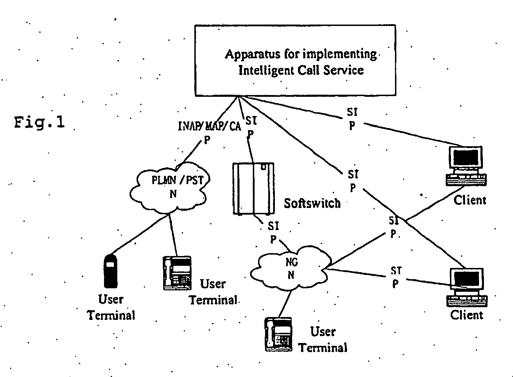

Fig.1 is a schematic diagram of a network system architecture according to an embodiment of the present invention. As shown in Fig.1, the user terminal that registers for Intelligent Call Service according to an embodiment of the present invention connects to the apparatus for implementing the Intelligent Call Service provided by an embodiment of the present invention via various access networks, such as PLMN (Public Land Mobile Network), PSTN (Public Switch Telephone Network) or NGN (Next Generation Network).

Hereinafter the method will be described in detail with reference to embodiments and the following figures.

In an embodiment 1, a Presence server obtains a user's Presence status information by interacting with a Presence client.

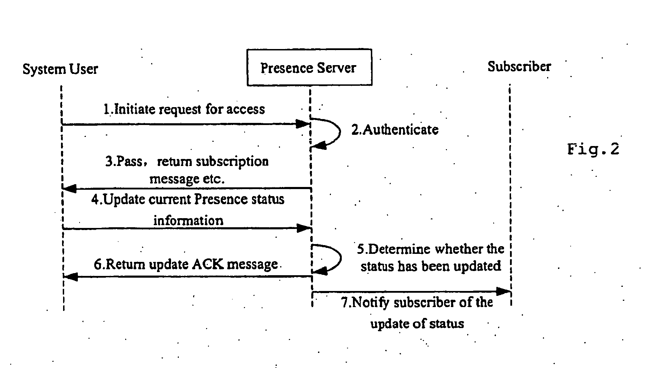

As shown in Fig.2, it is a flow chart of setting a user's Presence status information via the Presence client according to an embodiment of the present invention, including the following process:
Step 1. a user sends an access request to a Presence server by inputting an account number and a password by means of the presence client;
Step 2. the Presence server authenticates the user;
Step 3. the Presence server notifies the user of the authentication result; if the authentication is passed, the Presence server returns other users' subscription messages to the client;
Step 4. the user sends a request for updating current Presence status information to the Presence server according to actual needs;
Step 5. the Presence server determines whether the Presence status information stored locally is the same as the Presence status information inputted by the user in order to decide whether the user's Presence status information needs to be updated;
Step 6. if the Presence status information stored locally is the same as the Presence status information inputted by the user, the user is prompted that the Presence status information has been stored; otherwise, the user's Presence status information stored locally is updated with the Presence status information currently inputted by the user and a message of successful update is returned;
Step 7. the Presence server notifies the corresponding subscribers of the update of the user's Presence status information.

The user can also subscribe to other system users' Presence status information from the Presence server via the Presence client.

A user information table is stored in a system database, as shown in Tab.1. For example, a user's nickname, password, a user's unique number and a plurality of terminal numbers bound with the unique number, a user's Presence status information, a voice-mailbox number and a user's IP address, etc. are included in the table.

**Tab.1:**

| User Information Table | | | | | | | |
|---|---|---|---|---|---|---|---|
| Record number | User's nick-name | Unique number | Pre sence status infor mation | Bound number 1 | Bound number 2 | ... | Bound number N |
| 1 | ... | | | | | | |
| 2 | | | | ... | | | |
| ... | | | | | | | |
| N | | | | | | | ... |

An intelligent routing order table is also stored in the system database. As shown in Tab.2, a user's unique number, a user's Presence status information and a corresponding routing order are included in the table.

**Tab.2:**

| Intelligent Routing Order Table | | | |
|---|---|---|---|
| Record number | User's unique number | User's Presence status information | Routing order |
| 1 | | Home-online | 213 |
| ... | ... | | ... |
| N | | Office-online | 312 |

In Tab.2, the routing order refers to a connection order of communication terminals pre-customized by the user according to the user's current. Presence status information. For example, the routing order is 213, meaning that the bound number 2(such as home phone-number) bound with the user's unique number is firstly connected, secondly the bound number 1(such as mobile phone-number) is connected, lastly the bound number 3(such as office phone-number) is connected. The system can also be set to synchronously connect all these terminal numbers. Calls to other terminals are stopped when one of these terminals is picked up.

The user's Presence status information in Tab.1 and Tab:2 are updated by the Presence server.

On receiving a call request for calling the unique number, the service logic module queries Tab.2 according to the unique number to obtain corresponding Presence status information and gets a matched routing order; then queries Tab.1 according to the matched routing order to determine the corresponding terminal numbers bound with the unique number and issues the call sequentially or simultaneously to the corresponding terminal numbers.

In an embodiment 2, a Presence server and an ICR server are provided in the system and a user's Presence status information is updated via a synchronous interface.

As shown in Tab.3, a user Presence status information table is stored in the Presence server.

**Tab.3:**

| User Presence Status Information Table | | |
|---|---|---|
| Record number | User's unique number | Current Presence status information |
| 1 | 111 | Mobile-online |
| ... | ... | ... |
| N | 333 | Office-online |

The ICR server includes a database and a service logic module, stores the user information table and the intelligent routing order table, as shown in the Tab.1 and Tab.2.

The Presence server interacts with the Presence client to obtain and update a user's Presence status information. The detailed method is shown as the process in Fig.2, and will not be described again.

The ICR server and the Presence server are connected via a synchronous interface. When the user's Presence status information in the Presence server is updated, the user's Presence status information stored in the ICR server is synchronously updated via the synchronous interface.

When the system receives a call request for calling the unique number, the service logic module in the ICR server queries Tab.2 stored in the database to obtain corresponding Presence status information and gets a matched routing order; then queries Tab.1 according to the matched routing order to determine corresponding terminal numbers bound with the unique number and issues the call sequentially or simultaneously to the corresponding terminal numbers.

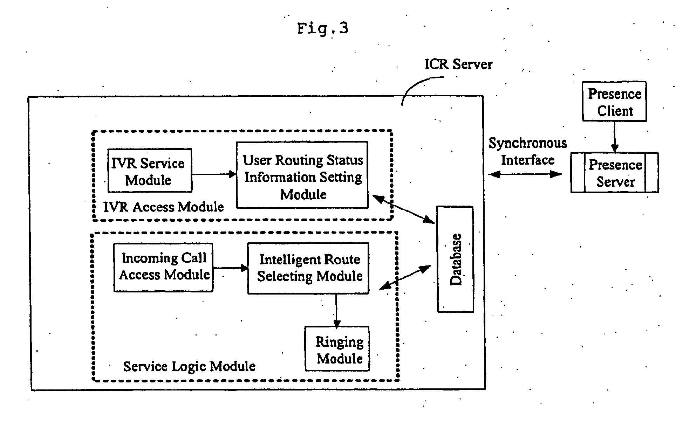

Fig.3 is a schematic diagram of a connection between an ICR server and a Presence server. Wherein, the ICR server includes a database and a service logic module. The service logic module includes:
an incoming call access module, receiving a call request for calling a unique number of a user and forwarding the call to an intelligent route selecting module;
an intelligent route selecting module, querying a database according to the unique number to obtain Presence status information of the called user, determining a routing order, determining corresponding terminal numbers bound with the unique number according to the routing order and notifying a ringing module;
a ringing module, issuing a ringing call sequentially or simultaneously to the corresponding terminal numbers.

The unique number information allocated to the registered user, the information of a plurality of communication terminal numbers bound with the user's unique number, the user's Presence status information and the routing order corresponding to the user's Presence status information are stored in the database.

The ICR server also includes an IVR (Interactive Voice Response) access module which includes an IVR service module and a user routing status information setting module. The IVR access module allows a user terminal which dials the corresponding access number of IVR service to access the system and implements information interacting with the user terminal by means of voice, receives the Presence status information inputted by the user and forwards it to the Presence server via the synchronous interface.

In this embodiment, a user's Presence status information can be updated in two manners.

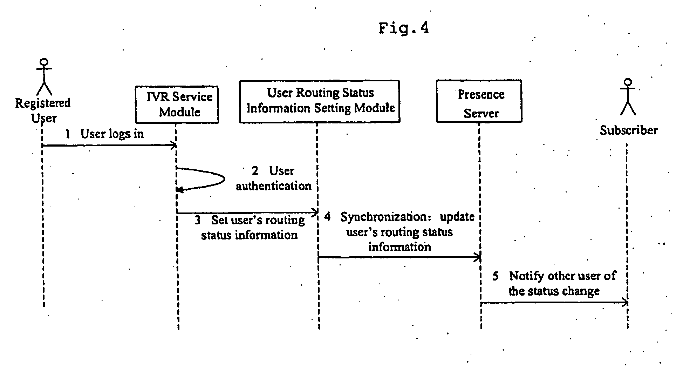

Manner 1: A user sets the user's Presence status information via IVR service process. As shown in Fig.4, the detailed process is as follows:
Step 1, the user dials the access number of IVR service via any communication client, inputs his own unique number and password, logs in the IVR service system which is provided in the IVR service module;
Step 2, the IVR service system starts an IVR service process to perform an authentication for user validity;.
Step 3, the user interacts with the system by means of voice and sets the user's current Presence status information according to the voice prompt of the system; for example, the voice prompt of the system are "please press 1 in mobile status", "please press 2 in home-online", etc., after the user completes the setting, the user routing status information setting module updates the user's Presence routing status information stored in Tab.2;
Step 4, the ICR server sends a request for updating Presence status information to the Presence server and synchronously updates the status information in the Presence server;
Step 5, the Presence server notifies subscribers of the status update.

The above process also includes: the user routing status information setting module compares the current Presence status information inputted by the user with the stored Presence status information, if they are the same, prompts that the user's Presence status information has been stored and does not need synchronizing with the Presence server to update the Presence status information; if they are not the same, updates the Presence status information and prompts that the user's update is successful.

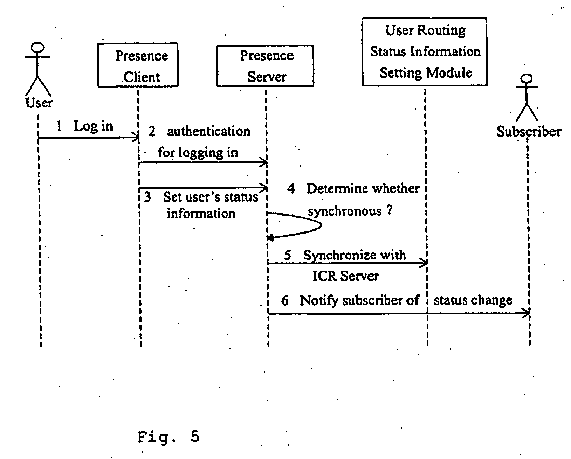

Manner 2: a user sets the user's Presence status information via a Presence client. The flow chart of the setting is shown in Fig.5. The detailed process is as follows:
Step 1, the user inputs an account number, password via the Presence client and logs in the Presence server;
Step 2, the Presence server authenticates the account number and returns authentication result information;
Step 3, if the user logs in successfully, the user can set current Presence status information according to actual needs;
Step 4, the Presence server determines whether the stored Presence status information is the same as the current Presence status information inputted by the user in order to decide whether the Presence status information needs to be updated and synchronized; if they are the same, the following steps are performed; otherwise, returns directly to the user that the Presence status information has been stored, and finishes the setting process;
Step 5, the Presence server sends a request for synchronously updating the user's Presence status information to the ICR server and synchronously updates the user's Presence status information in the ICR server;
Step 6, the Presence server notifies other subscribers of the update of the user's Presence status.

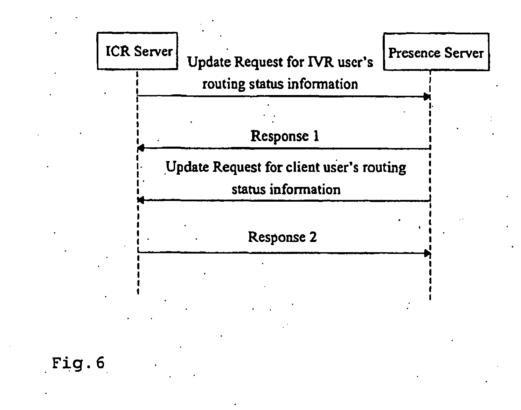

The Presence server and the ICR server are connected by a synchronous interface, the SIP(Session Initiation Protocol), XCAP(XML Configuration Access Protocol), SOAP (Simple Object Access Protocol) or HTTP (Hyper Text Transfer Protocol), etc., may be adopted as the communication protocol. The detailed synchronizing process is shown in Fig.6. Synchronizing messages are:
Updating request message for Presence status information sent by the ICR server to the Presence server (updating request for IVR user routing status information) includes: (message ID, user's unique number, updated routing status information, user's property};
Response message1 returned from the Presence server includes: {message ID, operation result}.

Updating request message for routing status information sent by the Presence server to the ICR server (updating request for client user routing status information) includes:
{message ID, user's unique number, updated routing status information, user's property};

Response message 2 returned from the ICR server includes:
{message ID, operation result}.

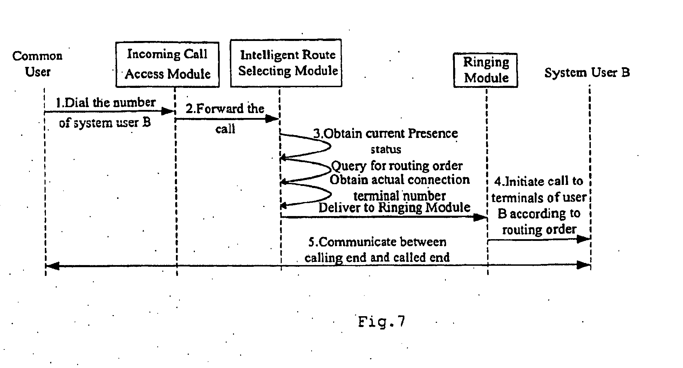

When an Intelligent Network System receives an incoming call to a user's unique number, the logic processing process of the incoming call, as shown in Fig.7, further includes:
Step 1, user A dials the unique number of system user B, the call accesses the system via the incoming call access module in the ICR server;
Step 2, the incoming call access module forwards the call to the intelligent route selecting module;
Step 3, the intelligent route selecting module queries the database according to the unique number of the called end to obtain Presence status information of the called end, then looks up the routing order pre-customized by the user according to the obtained Presence status information and obtains actual connection terminal number information in the routing order; then sends the obtained actual connection terminal number information to the ringing module;
Step 4, the ringing module issues a ringing call to each terminal number sequentially or simultaneously according to the system setting;
Step 5, the ringing is stopped after a ringing terminal is picked up, and the talk between the calling end and the called end is implemented.

## Claims

1. A method for implementing Intelligent Call Service, comprising:
allocating a unique number to a user,
storing the unique number, a plurality of terminal numbers bound with the unique number, and the user's Presence status information in a first table of a database in an Intelligent Call Routing, ICR, server,
storing a pre-customized routing order corresponding to the user's presence status information in a second table of the database;
receiving a call request for calling the unique number of the user;
obtaining the user's Presence status information from a Presence server according to the unique number,
determining the routing order according to the user's presence status information from the second table;
determining corresponding terminal numbers bound with the unique number from the first table according to the routing order determined from the second table; and;
issuing the call sequentially or simultaneously to the corresponding terminal numbers,
wherein obtaining the user's Presence status information further comprises:
logging in the Presence server via a Presence client and inputting the user's current Presence status information;
determining, whether the user's Presence status information stored in the Presence server is the same as the inputted Presence status information; if it is the same, prompting that the user's Presence status information has been stored, otherwise, updating the user's Presence status information stored in the Presence server and returning a message of successful update, and
when updating the user's Presence status information stored in the Presence server, synchronously updating the user's Presence status information stored in the database.

2. The method of claim 1, wherein, on receiving a call request for calling a unique number of a user, the ICR server determines a routing order according to the user's Presence status information corresponding to the unique number; and determines corresponding terminal numbers bound with the unique number according to the routing order and issues the call to the corresponding terminal numbers.

3. A method for implementing Intelligent Call Service, comprising:
allocating a unique number to a user,
storing the unique number, a plurality of terminal numbers bound with the unique number, and the user's Presence status information in a first table of a database,
storing a pre-customized routing order corresponding to the user's presence status information in a second table of the database;
receiving a call request for calling the unique number of the user;
obtaining the user's Presence status information from a Presence server according to the unique number,
determining the routing order according to the user's presence status information from the second table;
determining corresponding terminal numbers bound with the unique number from the first table according to the routing order determined from the second table, and
issuing the call sequentially or simultaneously to the corresponding terminal mumbers,
wherein obtaining the user's Presence status information further comprises:
dialing an access number corresponding to Interactive Voice Response (IVR) service via a user terminal and logging in an IVR service system in an ICR server;
inputting the user's current Presence status information according to prompt voice of the IVR service system;
determining whether the user's Presence status information stored in the database is the same as the Presence status information inputted by the user; if it is the same, prompting that the user's Presence status information has been stored, otherwise updating the user's Presence status information stored in the database and returning a message of successful update, and
when updating the user's Presence status information in the database, synchronously updating the user's Presence status information stored in the Presence server.

4. A system for implementing Intelligent Call Service, comprising an Intelligent Call Routing, ICR, server and a Presence server,
wherein the ICR server comprises:
a database, storing a unique number allocated to a user, a plurality of user terminal numbers bound with the unique number, and the user's Presence status information in a first table of the database, and storing a pre-customized routing order corresponding to the user's Presence status information in a second table of the database;
a service logic module, said service logic module comprising:
an incoming call access module, receiving a call request for calling the unique number of the user and forward the call to an intelligent route selecting module;
an intelligent route selecting module, querying the database according to the unique number to obtain Presence status information of the called user obtained from the presence server, determining a routing order according to the user's presence status information from the second table, determining corresponding terminal numbers bound with the unique number from the first table according to the routing order and notifying a ringing module;
a ringing module, issuing a ringing call sequentially or simultaneously to the corresponding terminal numbers,
wherein for obtaining the user's Presence status information, the Presence server is adapted to :
authenticate an account number of the user and return authentication result information, and receive the user's current Presence status information inputted by the user;
determine, whether the user's Presence status information stored in the Presence server is the same as the inputted Presence status information; if it is the same, prompting that the user's Presence status information has been stored, otherwise, updating the user's Presence status information stored in the Presence server and returning a message of successful update, and
when updating the user's Presence status information stored in the Presence server, the Presence server is adapted to synchronously update the user's Presence status information stored in the ICR server.

5. An apparatus for implementing Intelligent Call Service, comprising:
a database, storing a unique number allocated to a user, a plurality of user terminal numbers bound with the unique number, and the user's Presence status information in a first table of the database, and storing a pre-customized routing order corresponding to the user's Presence status information in a second table of the database;
a service logic module, said service logic module comprising:
an incoming call access module, receiving a call request for calling the unique number of the user and forward the call to an intelligent route selecting module;
an intelligent route selecting module, querying the database according to the unique number to obtain Presence status information of the called user obtained from a presence server, determining a routing order according to the user's presence status information from the second table, determining corresponding terminal numbers bound with the unique number from the first table according to the routing order and notifying a ringing module;
a ringing module, issuing a ringing call sequentially or simultaneously to the corresponding terminal numbers, and
an Interactive Voice Response, IVR, access module comprising an IVR service module,
wherein for obtaining the user's Presence status information the apparatus is further adapted to:
start, by an IVR service system provided in the IVR service module, an IVR service process to perform an authentication for user validity, interact with the user by means of voice, and set the user's current Presence status information; and
determine whether the user's Presence status information stored in the database is the same as the Presence status information inputted by the user; if it is the same, prompting that the user's Presence status information has been stored, otherwise updating the user's Presence status information stored in the database and returning a message of successful update, and
when updating the user's Presence status information stored in the database, the apparatus is adapted to synchronously update the user's Presence status information stored in the Presence server.

## Patentansprüche

1. Verfahren zum Implementieren eines intelligenten Anrufdienstes, umfassend:
Zuweisen einer eindeutigen Nummer zu einem Teilnehmer,
Speichern der eindeutigen Nummer, einer Vielzahl von Endgeräte-Nummern, die mit der eindeutigen Nummer verbunden sind, und der Information über den Anwesenheits-Status des Teilnehmers in einer ersten Tabelle einer Datenbank eines Servers für intelligentes Anruf-Routing, (Intelligent Call Routing, ICR),
Speichern einer vorzugeschnittenen Routing-Reihenfolge, die der Information über den Anwesenheits-Status des Teilnehmers entspricht in einer zweiten Tabelle der Datenbank;
Empfangen einer Verbindungsanforderung zum Anruf der eindeutigen Nummer des Teilnehmers;
Erhalten der Information über den Anwesenheits-Status des Teilnehmers von einem Anwesenheits-Server entsprechend der eindeutigen Nummer,
Bestimmen der Routing-Reihenfolge entsprechend der Information über den Anwesenheits-Status des Teilnehmers aus der zweiten Tabelle;
Bestimmen entsprechender Endgeräte-Nummern, die mit der eindeutigen Nummer aus der ersten Tabelle entsprechend der aus der zweiten Tabelle bestimmten Routing-Reihenfolge verbunden sind; und
sequentielle oder gleichzeitige Ausgabe des Anrufs an die entsprechenden Endgeräte-Nummern,
wobei das Erhalten der Information über den Anwesenheits-Status des Teilnehmers ferner umfasst:
Anmelden beim Anwesenheits-Server über einen Anwesenheits-Client und Eingabe der aktuellen Information über den Anwesenheits-Status des Teilnehmers;
Feststellen, ob die im Anwesenheits-Server gespeicherte Information über den Anwesenheits-Status des Teilnehmers dieselbe ist, wie die eingegebene Anwesenheits-Status-Information; wenn sie dieselbe ist, Melden, dass die Information über den Anwesenheits-Status des Teilnehmers gespeichert wurde, andernfalls Aktualisieren der im Anwesenheits-Server gespeicherten Information über den Anwesenheits-Status des Teilnehmers und Rückgabe einer Nachricht über die erfolgreiche Aktualisierung, und
wenn die in dem Anwesenheits-Server gespeicherte Information über den Anwesenheits-Status des Teilnehmers aktualisiert wird, synchrones Aktualisieren der in der Datenbank gespeicherten Information über den Anwesenheits-Status des Teilnehmers.

2. Verfahren nach Anspruch 1, wobei beim Empfangen einer Verbindungsanforderung zum Anruf einer eindeutigen Nummer eines Teilnehmers der ICR-Server eine Routing-Reihenfolge entsprechend der Information über den Anwesenheits-Status des Teilnehmers, die der eindeutigen Nummer entspricht, bestimmt; und entsprechende Endgeräte-Nummern, die mit der eindeutigen Nummer entsprechend der Routing-Reihenfolge verbunden sind, bestimmt und den Anruf an die entsprechenden Endgeräte-Nummern ausgibt.

3. Verfahren zum Implentieren eines intelligenten Anrufdienstes, umfassend:
Zuweisen einer eindeutigen Nummer zu einem Teilnehmer,
Speichern der eindeutigen Nummer, einer Vielzahl von Endgeräte-Nummern, die mit der eindeutigen Nummer verbunden sind, und Information über den Anwesenheits-Status des Teilnehmers in einer ersten Tabelle einer Datenbank,
Speichern einer vorzugeschnittenen Routing-Reihenfolge, die der Information über den Anwesenheits-Status des Teilnehmers entspricht in einer zweiten Tabelle der Datenbank;
Empfangen einer Verbindungsanforderung zum Anruf der eindeutigen Nummer des Teilnehmers;
Erhalten der Information über den Anwesenheits-Status des Teilnehmers von einem Anwesenheits-Server entsprechend der eindeutigen Nummer,
Bestimmen der Routing-Reihenfolge entsprechend der Information über den Anwesenheits-Status des Teilnehmers aus der zweiten Tabelle,
Bestimmen entsprechender Endgeräte-Nummern, die mit der eindeutigen Nummer aus der ersten Tabelle entsprechend der aus der zweiten Tabelle bestimmten Routing-Reihenfolge verbunden sind; und
sequentielle oder gleichzeitige Ausgabe des Anrufs an die entsprechenden Endgeräte-Nummern,
wobei das Erhalten der Information über den Anwesenheits-Status des Teilnehmers ferner umfasst:
Wählen einer Zugangsnummer, die einem "Interactive Voice Response"-Dienst, IVR-Dienst, entspricht, über ein Teilnehmerendgerät und Anmelden bei einem IVR-Dienst-System in einem ICR-Server;
Eingabe der aktuellen Information über den Anwesenheits-Status des Teilnehmers entsprechend der Sprach-Aufforderungen des IVR-Dienst-Systems;
Feststellen, ob die in der Datenbank gespeicherte Information über den Anwesenheits-Status des Teilnehmers dieselbe ist, wie die vom Teilnehmer eingegebene Anwesenheits-Status-Information; wenn sie dieselbe ist, Melden, dass die Information über den Anwesenheits-Status des Teilnehmers gespeichert wurde, andernfalls Aktualisierung der in der Datenbank gespeicherten Information über den Anwesenheits-Status des Teilnehmers und Rückgabe einer Nachricht über die erfolgreiche Aktualisierung, und
wenn die Information über den Anwesenheits-Status des Teilnehmers in der Datenbank aktualisiert wird, synchrones Aktualisieren der im Anwesenheits-Server gespeicherten Information über den Anwesenheits-Status des Teilnehmers.

4. System zum Implementieren eines intelligenten Anrufdienstes, umfassend einen Server für intelligentes Anruf-Routing, ICR, und einen Anwesenheits-Server,
wobei der ICR-Server umfasst:
eine Datenbank, die eine eindeutige Nummer, die einem Teilnehmer zugewiesen wurde, speichert, eine Vielzahl von Nummern von Teilnehmerendgeräten, die mit der eindeutigen Nummer verbunden sind, und die Information über den Anwesenheits-Status des Teilnehmers in einer ersten Tabelle der Datenbank, und Speichern einer vorzugeschnittenen Routing-Reihenfolge, die der Information über den Anwesenheits-Status des Teilnehmers entspricht in einer zweiten Tabelle der Datenbank;
ein Dienstlogikmodul, wobei das Dienstlogikmodul umfasst:
ein Zugriffs-Modul für ankommende Anrufe, das eine Verbindungsanforderung zum Anruf der eindeutigen Nummer des Teilnehmers empfängt und den Anruf an ein Modul zur intelligenten Auswahl einer Route weiterleitet;
ein Modul zur intelligenten Auswahl einer Route, das die Datenbank entsprechend der eindeutigen Nummer abfragt, um Information über den Anwesenheits-Status des angerufenen Teilnehmers zu erhalten, die von dem Anwesenheits-Server erhalten wird, eine Routing-Reihenfolge gemäß der Information über den Anwesenheits-Status des Teilnehmers aus der zweiten Tabelle bestimmt, entsprechende Endgeräte-Nummem bestimmt, die mit der eindeutigen Nummer aus der ersten Tabelle entsprechend der Routing-Reihenfolge verbunden sind, und ein Tonruf-Modul benachrichtigt;
ein Tonruf-Modul, das einen Tonruf sequentiell oder gleichzeitig an die entsprechenden Endgeräte-Nummem ausgibt,
wobei der Anwesenheits-Server zum Erhalten der Information über den Anwesenheits-Status des Teilnehmers ausgelegt ist zum:
Authentisieren einer Kontonummer des Teilnehmers und Rückgeben einer resultierenden Authentisierungsinformation und Empfangen der von dem Teilnehmer eingegebenen aktuellen Information über den Anwesenheits-Status des Teilnehmers;
Feststellen, ob die im Anwesenheits-Server gespeicherte Information über den Anwesenheits-Status des Teilnehmers dieselbe ist, wie die eingegebene Anwesenheits-Status-Information; wenn sie dieselbe ist, Melden, dass die Information über den Anwesenheits-Status des Teilnehmers gespeichert wurde, anderenfalls Aktualisieren der im Anwesenheitsserver gespeicherten Information über den Anwesenheits-Status des Teilnehmers und Rückgabe einer Nachricht über die erfolgreiche Aktualisierung, und
wenn die in dem Anwesenheits-Server gespeicherte Information über den Anwesenheits-Status des Teilnehmers aktualisiert wird, ist der Anwesenheits-Server dafür ausgelegt, gleichzeitig die in dem ICR-Server gespeicherte Information über den Anwesenheits-Status des Teilnehmers zu aktualisieren.

5. Vorrichtung zum Implementieren eines intelligenten Anrufdienstes, umfassend:
eine Datenbank, die eine eindeutige Nummer, die einem Teilnehmer zugeordnet ist, eine Vielzahl von Nummern von Teilnehmerendgeräten, die mit der eindeutigen Nummer verbunden sind, und die Information über den Anwesenheits-Status des Teilnehmers in einer ersten Tabelle der Datenbank und eine vorzugeschnittene Routing-Reihenfolge, die der Information über den Anwesenheits-Status des Teilnehmers entspricht, in einer zweiten Tabelle der Datenbank speichert,
ein Dienstlogik-Modul, wobei das Dienstlogik-Modul umfasst:
ein Zugriffs-Modul für ankommende Anrufe, das eine Verbindungsanforderung zum Anruf der eindeutigen Nummer des Teilnehmers empfängt und den Anruf an ein Modul zur intelligenten Auswahl einer Route weiterleitet;
ein Modul zur intelligenten Auswahl einer Route, das die Datenbank entsprechend der eindeutigen Nummer abfragt, um Information über den Anwesenheits-Status des angerufenen Teilnehmers aus einem Anwesenheits-Server zu erhalten, eine Routing-Reihenfolge gemäß der Information über den Anwesenheits-Status des Teilnehmers aus der zweiten Tabelle bestimmt, entsprechende Endgeräte-Nummern bestimmt, die mit der eindeutigen Nummer aus der ersten Tabelle entsprechend der Routing-Reihenfolge verbunden sind, und ein Tonruf-Modul benachrichtigt;
ein Tonruf-Modul, das einen Tonruf sequentiell oder gleichzeitig an die entsprechenden Endgeräte-Nummern ausgibt, und
ein Zugangs-Modul für "Interactive Voice Response", IVR, umfassend ein IVR-Dienstmodul,
wobei die Vorrichtung zum Erhalten der Information über den Anwesenheits-Status des Teilnehmers ferner ausgelegt ist zum:
Starten eines IVR-Dienstprozesses durch ein IVR-Dienst-System, das in dem IVR-Dienst-Modul bereitgestellt ist, um eine Authentisierung zur Teilnehmergültigkeit durchzuführen, Interagieren mit dem Teilnehmer mittels Sprache und Setzen der aktuellen Information über den Anwesenheits-Status des Teilnehmers; und
Feststellen, ob die in der Datenbank gespeicherte Information über den Anwesenheits-Status des Teilnehmers dieselbe ist, wie die vom Teilnehmer eingegebene Anwesenheits-Status-Information; wenn sie dieselbe ist, Melden, dass die Information über den Anwesenheits-Status des Teilnehmers gespeichert wurde, andernfalls Aktualisieren der in der Datenbank gespeicherten Information über den Anwesenheits-Status des Teilnehmers und Rückgabe einer Nachricht über die erfolgreiche Aktualisierung, und
wenn die in der Datenbank gespeicherte Information über den Anwesenheits-Status des Teilnehmers aktualisiert wird, ist die Vorrichtung dafür ausgelegt, gleichzeitig die in dem Anwesenheits-Server gespeicherte Information über den Anwesenheits-Status des Teilnehmers zu aktualisieren.

## Revendications

1. Procédé pour mettre en oeuvre un Service d'appels intelligent, comprenant :
l'allocation d'un numéro univoque à un utilisateur,
la mémorisation du numéro univoque, d'une multitude de numéros de terminaux liés au numéro univoque, et des informations d'état de présence de l'utilisateur dans une première table d'une base de données dans un serveur de routage d'appels intelligent, ICR,
la mémorisation d'un ordre de routage pré-personnalisé correspondant aux informations d'état de présence de l'utilisateur dans une seconde table de la base de données ;
la réception d'une demande d'appel pour appeler le numéro univoque de l'utilisateur ;
l'obtention des informations d'état de présence de l'utilisateur à partir d'un serveur de présence selon le numéro univoque,
la détermination de l'ordre de routage selon les informations d'état de présence de l'utilisateur à partir de la seconde table ;
la détermination de numéros de terminaux correspondants liés au numéro univoque à partir de la première table selon l'ordre de routage déterminé à partir de la seconde table ;
et
l'émission séquentielle ou simultanée de l'appel vers les numéros de terminaux correspondants,
dans lequel l'obtention des informations d'état de présence de l'utilisateur comprend en outre :
l'entrée en session au serveur de présence via un client de présence et l'entrée des informations actuelles sur l'état de présence de l'utilisateur ;
la détermination de si les informations d'état de présence de l'utilisateur mémorisées dans le serveur de présence sont identiques ou non aux informations d'état de présence entrées ; si elles sont identiques, la notification que les informations d'état de présence de l'utilisateur ont été mémorisées , dans le cas contraire, la mise à jour des informations d'état de présence de l'utilisateur mémorisées dans le serveur de présence et l'envoi en retour d'un message de réussite de la mise à jour, et
lors de la mise à jour des informations d'état de présence de l'utilisateur mémorisées dans le serveur de présence, la mise à jour synchrone des informations d'état de présence de l'utilisateur mémorisées dans la base de données.

2. Procédé selon la revendication 1, dans lequel à la réception d'une demande d'appel pour appeler un numéro univoque d'un utilisateur, le serveur ICR détermine un ordre de routage selon les informations d'état de présence de l'utilisateur correspondant au numéro univoque ; et détermine des numéros de terminaux correspondants liés au numéro univoque selon l'ordre de routage et émet l'appel vers les numéros de terminaux correspondants.

3. Procédé pour mettre en oeuvre un Service d'appels intelligent, comprenant :
l'allocation d'un numéro univoque à un utilisateur,
la mémorisation du numéro univoque, d'une multitude de numéros de terminaux liés au numéro univoque, et des informations d'état de présence de l'utilisateur dans une première table d'une base de données,
la mémorisation d'un ordre de routage pré-personnalisé correspondant aux informations d'état de présence de l'utilisateur dans une seconde table de la base de données ;
la réception d'une demande d'appel pour appeler le numéro univoque de l'utilisateur ;
l'obtention des informations d'état de présence à partir d'un serveur de présence selon le numéro univoque,
la détermination de l'ordre de routage selon les informations d'état de présence de l'utilisateur à partir de la seconde table ;
la détermination de numéros de terminaux correspondants liés au numéro univoque à partir de la première table selon l'ordre de routage déterminé à partir de la seconde table,
et
l'émission séquentielle ou simultanée de l'appel vers les numéros de terminaux correspondants,
dans lequel l'obtention des informations d'état de présence de l'utilisateur comprend en outre :
la composition d'un numéro d'accès correspondant à un service de réponse vocale interactive (IVR) via un terminal d'utilisateur et l'entrée en session dans un système de service IVR dans un serveur ICR ;
l'entrée des informations actuelles sur l'état de présence de l'utilisateur selon la sollicitation vocale du système de service IVR ;
la détermination de si les informations d'état de présence de l'utilisateur mémorisées dans la base de données sont identiques ou non aux informations d'état de présence entrées par l'utilisateur ; si elles sont identiques, la notification que les informations d'état de présence de l'utilisateur ont été mémorisées, dans le cas contraire, la mise à jour des informations d'état de présence de l'utilisateur mémorisées dans la base de données et
l'envoi en retour d'un message de réussite de la mise à jour, et
lors de la mise à jour des informations d'état de présence de l'utilisateur, la mise à jour synchrone des informations d'état de présence de l'utilisateur mémorisées dans le serveur de présence.

4. Système pour mettre en oeuvre un Service d'appels intelligent, comprenant un serveur de routage d'appels intelligent, ICR, et un serveur de présence,
dans lequel le serveur ICR comprend :
une base de données, mémorisant un numéro univoque alloué à un utilisateur, une multitude de numéros de terminaux d'utilisateur liés au numéro univoque, et les informations d'état de présence de l'utilisateur dans une première table de la base de données, et mémorisant un ordre de routage pré-personnalisé correspondant aux informations d'état de présence de l'utilisateur dans une seconde table de la base de données ;
un module de logique de service, ledit module de logique de service comprenant :
un module d'accès d'appel entrant, recevant une demande d'appel pour appeler le numéro univoque de l'utilisateur et faire suivre l'appel à un module de sélection de route intelligent ;
un module intelligent de sélection de route, interrogeant la base de données selon le numéro univoque pour obtenir des informations d'état de présence de l'utilisateur appelé obtenues à partir du serveur de présence, déterminant un ordre de routage selon les informations d'état de présence de l'utilisateur provenant de la seconde table, déterminant les numéros de terminaux correspondants liés au numéro univoque provenant de la première table selon l'ordre de routage et notifiant un module de sonnerie ;
un module de sonnerie, émettant séquentiellement ou simultanément un appel avec sonnerie vers les numéros de terminaux correspondants,
dans lequel, pour obtenir les informations d'état de présence de l'utilisateur, le serveur de présence est conçu pour :
authentifier un numéro de compte de l'utilisateur et retourner des informations de résultat d'authentification, et recevoir les informations actuelles sur l'état de présence de l'utilisateur entrées par l'utilisateur ;
déterminer si les informations d'état de présence de l'utilisateur mémorisées dans le serveur de présence sont identiques ou non aux informations d'état de présence entrées ;
si elles sont identiques, notifier que les informations d'état de présence de l'utilisateur ont été mémorisées, dans le cas contraire, mettre à jour les informations d'état de présence de l'utilisateur mémorisées dans le serveur de présence et envoyer en retour un message de réussite de la mise à jour, et
lors de la mise à jour des informations d'état de présence de l'utilisateur mémorisées dans le serveur de présence, le serveur de présence est conçu pour mettre à jour, de manière synchrone, les informations d'état de présence de l'utilisateur mémorisées dans le serveur ICR.

5. Appareil pour mettre en oeuvre un Service d'appels intelligent, comprenant :
une base de données, mémorisant un numéro univoque alloué à un utilisateur, une multitude de numéros de terminaux d'utilisateur liés au numéro univoque, et les informations d'état de présence de l'utilisateur dans une première table de la base de données, et mémorisant un ordre de routage pré-personnalisé correspondant aux informations d'état de présence de l'utilisateur dans une seconde table de la base de données ;
un module de logique de service, ledit module de logique de service comprenant :
un module d'accès d'appel entrant, recevant une demande d'accès pour appeler le numéro univoque de l'utilisateur et faire suivre l'appel à un module de sélection de route intelligent ;
un module intelligent de sélection de route, interrogeant la base de données selon le numéro univoque pour obtenir des informations d'état de présence de l'utilisateur appelé obtenues à partir d'un serveur de présence, déterminant un ordre de routage selon les informations d'état de présence de l'utilisateur provenant de la seconde table,
déterminant des numéros de terminaux correspondants liés au numéro univoque provenant de la première table selon l'ordre de routage et notifiant un module de sonnerie ;
un module de sonnerie émettant séquentiellement ou simultanément un appel avec sonnerie vers les numéros de terminaux correspondants, et
un module d'accès de réponse vocale interactive, IVR, comprenant un module de service IVR,
où, pour obtenir les informations d'état de présence de l'utilisateur, l'appareil est en outre conçu pour :
démarrer, par un système de service IVR fourni dans le module de service IVR, un processus de service IVR pour exécuter une authentification de validité d'utilisateur, interagir avec l'utilisateur au moyen de la voix, et définir les informations actuelles sur l'état de présence de l'utilisateur ; et
déterminer si les informations d'état de présence de l'utilisateur mémorisées dans la base de données sont les mêmes que les informations d'état de présence entrées par l'utilisateur ; si elles sont identiques, notifier que les informations d'état de présence de l'utilisateur ont été mémorisées, dans le cas contraire, mettre à jour les informations d'état de présence de l'utilisateur mémorisées dans la base de données et envoyer en retour un message de réussite de la mise à jour, et
lors de la mise à jour des informations d'état de présence de l'utilisateur mémorisées dans la base de données, l'appareil est conçu pour mettre à jour, de manière synchrone, les informations d'état de présence de l'utilisateur mémorisées dans le serveur de présence.
